# EUROPÄISCHE PATENTSCHRIFT

(11) **EP 3 122 814 B1**
(45) Veröffentlichungstag und Bekanntmachung des Hinweises auf die Patenterteilung: **22.12.2021**
(21) Anmeldenummer: 15728745.9
(22) Anmeldetag: 04.03.2015
(51) Int. Cl.: B07C 5/342, G01N 21/64, C08K 5/3437, C09B 5/62, G01N 31/22, B29B 17/02

(54) **DIE AUTOMATISCHE SORTIERUNG VON POLYMERMATERIALIEN ANHAND DER FLUORESZENZABKLINGZEIT DER EIGENFLUORESZENZ DES POLYMERS UND DER FLUORESZENZ VON MARKIERUNGSSTOFFEN**
AUTOMATIC SORTING OF POLYMERMATERIALS BY USE OF FLUORESCENCE DECAY OF THE SELF FLUORESCENCE OF THE POLYMER AND OF THE FLUORESCENCE OF THE MARKING DYE
TRI AUTOMATIQUE DE MATÉRIAUX POLYMÈRE À L'AIDE DE L'AUTO-FLUORESCENCE DU POLYMÈRE AINSI QUE DE LA FLUORESCENCE DU COMPOSÉ DE MARQUAGE

(30) Priorität: 27.03.2014 DE 102014004529
(43) Veröffentlichungstag der Anmeldung: 01.02.2017
(73) Patentinhaber: Unisensor Sensorsysteme GmbH, 76149 Karlsruhe (DE)
(72) Erfinder: LANGHALS, Heinz, 85521 Ottobrunn (DE); SCHLÜCKER, Thorben, 85521 Ottobrunn (DE); ZGELA, Dominik, 83376 Truchtlaching (DE)
(74) Vertreter: Ullrich & Naumann PartG mbB
(86) Internationale Anmeldenummer: PCT/DE2015/000102
(87) Internationale Veröffentlichungsnummer: WO 2015/144114

(56) Entgegenhaltungen:
- DE-A1- 4 210 970
- DE-A1- 4 231 477
- DE-A1-102012 012 772
- None

## Beschreibung

### Stand der Technik

Organische Polymermaterialien stellen technische Massenprodukte dar, deren Wiederverwertung zunehmend interessanter und wichtiger wird. Durch die unkontrollierte Entsorgung solcher Materialien sind in zunehmendem Maße Umweltprobleme entstanden ("P1astic Planet"). Darüber hinaus bildet das Recycling von Polymermaterialien eine wertvolle Quelle mir organische Rohstoffe. Der ganz überwiegende Anteil der technisch eingesetzten makromolekularen Materialien sind Thermoplaste, die sich grundsätzlich durch Aufschmelzen und neue Formgebung wiederverwenden lassen, dies erfordert aber wegen der Unverträglichkeit polymerer Stoffe untereinander in hohem Maße Sortenreinheit, denn bereits 5% Fremdmaterial kann die Eigenschaften in erheblichem Maße verschlechtern. Gebrauchte Materialien fallen
allerdings in den wenigsten Fällen sortenrein an, allenfalls als Abfall bei Produktionsprozessen, gesammeltes Material ist üblicherweise mehr oder weniger vermischt und muss, insbesondere vor der Verarbeitung zu hochwertigen Produkten, sortiert werden. Ein Sortieren ist auch bei andersartiger Wiederverwertung interessant, weil dann die entsprechenden Prozesse genau auf die jeweiligen Materialien abgestimmt werden können. Das Sortieren zum Recycling erfordert eine schnelle, effiziente und wenig aufwendige Detektionsmethode. Es sind Detektionsverfahren bekannt, die auf der unterschiedlichen Dichte oder den elektrostatischen Eigenschaften [1] makromolekularer Stoffe beruhen, solche Verfahren sind grundsätzlich aufwendig und störanfallig.

Optische Methoden sind attraktiv, weil sie schnell und sicher sind und nur einen Verhältnismäßig kleinen Aufwand erfordern. Die Markierung von Polymermaterialien mit Fluoreszenzfarbstoffen ist beschrieben worden [2], um anhand der Fluoreszenzspektren (Wellenlängenabhängigkeit der Fluoreszenzintensität) auf das jeweilige Material bzw. die jeweilige Charge zu schließen [3,4]. Dieses Verfahren erfordert die Registrierung und Zuordnung der Fluoreszenzspektren individuell mir jedes Kunststoff-Teilchen und ist dadurch grundsätzlich Verhältnismäßig aufwändig. Außerdem müssen die Polymermaterialien mir ihre Sortierung bereits markiert sein, dies schränkt das Verfahren auf ein gezieltes Recycling ein. Es ist insbesondere allgemein für Altstoffe unbrauchbar. Es wäre wünschenswert, wenn ein Sortierverfahren auch mir unmarkiertes Material zur Verneigung stünde und somit das aufwändige Registrieren von Fluoreszenzspektren vermeiden würde.

DE 42 31 477 A1 zeigt ein Verfahren zur optischen Sortierung von Kunststoffen mittels Laser-Spektroskopie. Hierbei wird ein Fluoreszenzfarbstoff zur Markierung des Kunststoffs hinzugefügt. Anhand von Fluoreszenzwellenlängen und -ableitungskurven wird der Typ des Kunststoffs bestimmt.

### Aufgabenstellung

Es bestand die Aufgabe, ein optisches Detektionssystem zu entwickeln, um unmarkierte polymere Werkstoffe sortenrein zu identifizieren.

### Beschreibung

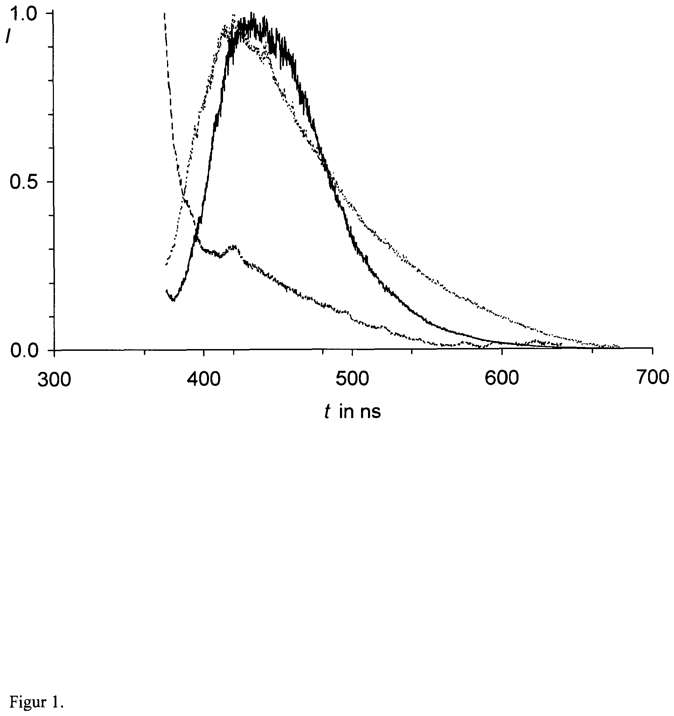

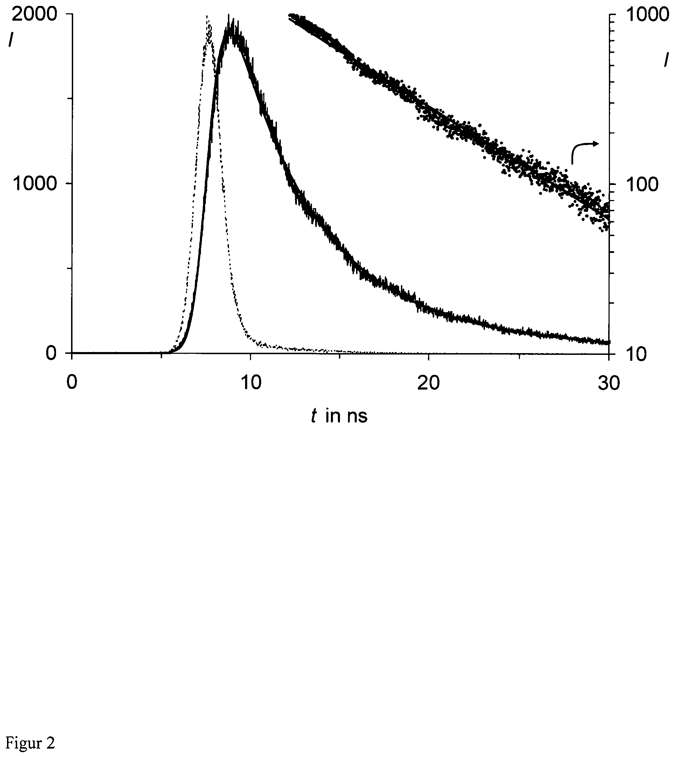

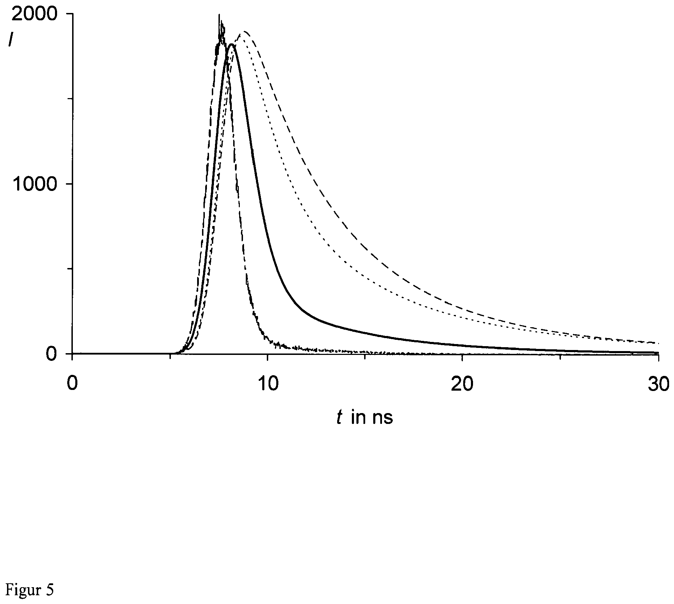

Wir haben gefunden, dass technische polymere Werkstoffe (hier als Beispiele Luran, Delrin und Ultramid) überraschend starke Eigenfluoreszenzen zeigen wenn sie beispielsweise im UV-Bereich, insbesondere im UVA-Bereich, oder auch im kurzweilig sichtbaren Bereich optisch angeregt werden, siehe Figur 1. Man könnte nun eine Identifizierung über die Eigenfluoreszenzspektren versuchen und hätte dann unverändert die Problematik, die Wellenlängenabhängigkeit der Fluoreszenz zu registrieren und hierüber eine Identifizierung vorzunehmen. Wir haben demgegenüber gefunden, dass die Fluoreszenzabklingzeit überraschend stark von den eingesetzten Materialien abhängt, siehe die Figuren 2 bis 4 und Tabelle 1. Die Zeitkonstante der Fluoreszenzabklingzeit kann als "Fingerabdruck" des jeweiligen Polymermaterials verwendet werden, die Zeitkonstante ist nur wenig von der Anregungswellelänge abhängig, siehe Figur 5. Zweckmäßigerweise erfolgt die optische Anregung im UVA mit beliebigen Lichtquellen, bevorzugt im Bereich von 365 um, hier sind die Quecksilberdampf-Linie bei 365 nm oder die Wasserstoff-Balmer-Linien bei 397, 389 und 384 um, aber auch Obertöne von Neodym YAG-Lasern, wie z.B. bei 355 um, von Interesse, oder aber auch die Lichtemissionen diverser Halbleiter-Laser (z.B. auf Galliumnitrid-Basis), die in Wellenlängenbereichen bis beispielsweise 405 nm zur Verfügung stehen und sich als gepulste Lichtquellen sehr gut eignen. Man erhält unter Fluoreszenzanregung bei 365 nm beispielsweise bei einer Detektion bei 573 mn (diese Wellenlänge wird bevorzugt, weil man damit eine Vielzahl von Kunststoffen und Markem abdeckt) für die technischen Kunststoffe Ultramid 1.96 ns, mir Delrin 0.74 ns und für Luran 3.53 ns Abklingzeit (die kurzzeitige Komponente wird bevorzugt), die sich sehr gut unterscheiden lassen und damit eine hohe Detektionssicherheit ermöglichen, siehe Tabelle 1.

Da die Fluoreszenzabklingkurven üblicherweise genau mit Exponentialfunktonen beschrieben werden können, ist gleiches Vorgehen für die Detektion diverser Polymer-Materialien möglich. Es ist dabei nicht einmal erforderlich, den ganzen Exponentialverlauf zu erfassen, sondern es reichen zwei punktförmige oder auch integrierende Intensitätsmessungen [5] (Kumulation - Summation - der Einzelmessungen jeweils über eine definierte Dauer) zu unterschiedlichen Zeiten völlig aus. Bei biexponentiellem Verlauf benötigt man drei Intensitätsmessungen, bei den reinen Kunststoffen sind aber die monoexponentiellen Anteile relevant.

**Tabelle 1. Fluoreszenzabklingzeiten reiner Polymerer, der Marker in Chloroform-Lösung und der dotierten Polymeren.**

| Probe | *τ* in ns^{a)} | *τ*_{bi} in ns^{b)} | *λ*ₑₓ^{c)} | *λ*ₑₘ^{d)} |
|---|---|---|---|---|
| Delrin | 0.74^{e)} | 5.78 | 365 | 573 |
| Luran | 3.53^{e)} | 8.42 | 365 | 573 |
| Ultramid | 1.96^{e)} | 7.83 | 365 | 573 |
| Ester **1** in CHCl₃ | 3.53 | | 442 | 485 |
| S-13 (**2**) in CHCl₃ | 4.06 | | 490 | 573 |
| Terrylen **3** in CHCl₃ | 3.66 | | 598 | 667 |
| Delrin-Ester (**1**) | 3.90 | | 442 | 485 |
| Delrin-Ester (**1**) | 3.92 | | 490 | 573 |
| Delrin-S-13 (**2**) | 3.74 | | 490 | 573 |
| Delrin-Terrylen (**3**) | 3.31 | | 598 | 667 |
| Delrin-Terrylen (**3**) | 3.34 | | 490 | 667 |
| Luran-Ester (**1**) | 4.08 | | 490 | 573 |
| Luran-S-13 (**2**) | 4.56 | | 490 | 573 |
| Luran-Terrylen (3**)** | 3.53 | | 598 | 667 |
| Luran-Terrylen (**3**) | 3.96 | | 490 | 667 |
| Ultramid-Ester (**1**) | 2.44^{e)} | 7.53 | 442 | 485 |
| Ultramid-Ester (**1**) | 2.26^{e)} | 5.75 | 490 | 573 |
| Ultramid-S-13 (**2**) | 1.83^{e)} | 5.37 | 490 | 573 |
| Ultramid-Terrylen (**3**) | 2.34^{e)} | 6.98 | 598 | 667 |

| | | | | |
|---|---|---|---|---|
| a) Fluoreszenz-Abklingkonstante; b) zusätzlicher biexponentieller Anteil; c) Anregungswellenlänge in nm; d) Detektionswellenlänge in nm. e) Bi-exponentiell ausgewertet. | | | | |

Die Integration über jeweils eine definierte Zeitspanne, zweckmäßigerweise eine Messung vor der ersten Halbwertzeit und eine Messung nach der ersten Halbwertzeit, ist dabei von besonderem Vorteil, weil dadurch das Signal-zu-Rausch-Verhältnis in erheblichem Maße verbessert wird (das Fluoreszenzlicht der Probe wird effizienter genutzt). Geht man von üblichen Fluoreszenzabklingzeiten von etwa 5 ns aus, dann erfordert das zwei Messvorgänge in Abständen von ein bis zwei Nanosekunden mit Integrationszeiten von ebenfalls etwa ein bis zwei Nanosekunden. Messungen mit einer solchen zeitlichen Auflösung stellen zwar elektronisch kein Problem dar, der Messvorgang lässt sich aber weiter vereinfachen, indem die Kunststoff-Probe nicht nur einmal, sondern periodisch optisch angeregt wird. Man kann davon ausgehen, dass nach etwa zehn Halbwertszeiten die optische Anregung so weit abgeklungen ist, dass eine erneute Anregung ungestört erfolgen kann; geht man von einen ungünstigen Fall mit 10 ns Fluoreszenzabklingzeit aus, ist dies nach etwa 70 ns erreicht. Man kann die Kunststoff-Probe daher periodisch mit einer Pulsfolge von 70 ns optisch anregen, also mit einer Repetierfrequenz von etwa 15 MHz. Die zwei Messungen für die Bestimmung der Fluoreszenzabklingzeiten brauchen dann nicht einmal innerhalb einer Abklingzeit zu erfolgen, sondern können zeitverschoben bei zwei aufeinanderfolgenden Pulsen vorgenommen werden, und die Anforderungen an die elektronischen Bauelemente für die Auswertung werden dadurch noch weiter verkleinert.

**Tabelle 2. Test auf Reproduzierbarkeit der Messung der Fluoreszenzabklingzeiten und der Methode durch Wiederholung der Einzelversuche bei jeweils unterschiedlich geschütteten und damit verschieden orientierten Granulat-Proben.**

| Probe | *τ* in ns^{a)} | *τ*ₘ, *s*^{b)} | *λ*ₑₓ^{c)} | *λ*ₑₘ^{d)} |
|---|---|---|---|---|
| Delrin-Ester (**1**) | 3.92 | | 442 | 485 |
| Delrin-Ester (**1**) | 3.91 | | 442 | 485 |
| Delrin-Ester (**1**) | 3.95 | | 442 | 485 |
| Delrin-Ester (**1**) | 3.91 | | 442 | 485 |
| Delrin-Ester (**1**) | 3.90 | 3.92, 0.02 | 442 | 485 |
| Delrin-S-13 (**2**) | 3.78 | | 490 | 573 |
| Delrin-S-13 (**2**) | 3.77 | | 490 | 573 |
| Delrin-S-13 (**2**) | 3.79 | | 490 | 573 |
| Delrin-S-13 (**2**) | 3.79 | | 490 | 573 |
| Delrin-S-13 (**2**) | 3.73 | | 490 | 573 |
| Delrin-S-13 (**2**) | 3.74 | 3.77, 0.03 | 490 | 573 |
| Delrin-Terrylen (**3**) | 3.35 | | 598 | 667 |
| Delrin-Terrylen (**3**) | 3.45 | | 598 | 667 |
| Delrin-Terrylen (**3**) | 3.31 | 3.37, 0.07 | 598 | 667 |
| Luran-S-13 (**2**) | 4.55 | | 490 | 573 |
| Luran-S-13 (**2**) | 4.56 | | 490 | 573 |
| Luran-S-13 (**2**) | 4.43 | 4.51, 0.07 | 490 | 573 |
| Ultramid-Ester (**1**) | 2.43 | | 442 | 485 |
| Ultramid-Ester (**1**) | 2.44 | 2.44 | 442 | 485 |

| | | | | |
|---|---|---|---|---|
| a) Fluoreszenz-Abklingkonstante; b) Mittelwert, Standardabweichung s; c) Anregungswellenlänge in nm; d) Detektionswellenlänge in nm. | | | | |

Leistungsfähiger ist die Messung innerhalb eines Fluoreszenzabklingvorgangs, indem die Detektion der beiden erforderlichen integrierten Signale bei periodischer Anregung zeitverschoben und durch den Anregungspuls getriggert vorgenommen wird; hier kann eine Auftrennung beispielsweise mit zwei parallel arbeitenden phasenempfindlichen Detektoren (PSD) erfolgen, über die, über zwei unterschiedliche Zeitbereiche der Abklingkurve integrierend, die Intensitäten gemessen werden. Schließlich ist es nicht einmal erforderlich, die absolute Abklingzeit zu bestimmen, denn hier können auch gerätespezifische Rohdaten verwendet werden, solange diese hinreichend reproduzierbar sind; bei allen verwendeten Geräten hat sich eine ausgezeichnete Reproduzierbarkeit der Messwerte auch als Rohdaten (z.B. nicht durch Dekonvolution korrigiert) ergeben. Es werden sehr kleine Standardabweichungen s von 0.02 bis 0.07 ns gefunden, die eine eindeutige Diskriminierung zwischen den diversen Proben belegen; siehe Tabelle 2. Durch die unproblematische Verwendung auch von Rohdaten wird das Verfahren noch erheblich weiter vereinfacht.

Wenn man berücksichtigt, dass ein Recycling-Flake in ungünstigen Fällen maximal 10 mm groß ist und man zur Sicherheit 20 mm Platz zwischen zwei Flakes lässt, dann stünden bei 15 MHz Pulsfolge und einer Vorschubgeschwindigkeit von 500 m/s (man sollte aus technologischen Gründen deutlich unter der Schallgeschwindigkeit bleiben) mehr als 200 Anregungspulse pro Flake zur Verfügung. Wenn man diese mittelt, kann man das Signal-zu-Rausch-Verhältnis erheblich verbessern und damit die Detektionssicherheit noch weiter erhöhen. Bei einer Masse von 25 mg für ein Recycling-Flake (der Wert wurde durch Mittelung von Flakes aus handelsüblichem technischem Recycling Material bestimmt), kann man mit einer Sortierlinie dann 1.5 Tonnen Material pro Stunde sortieren. Dies ist als realistische technologische Dauer-Sortierleistung zu betrachten, die von der beschriebenen Detektionsmethode bewältigt werden kann. In vielen Fällen sind aber so hohe Sortierleistungen nicht erforderlich; bei kleineren Sortierleistungen sind die Anforderungen an Elektronik und Mechanik erheblich niedriger.

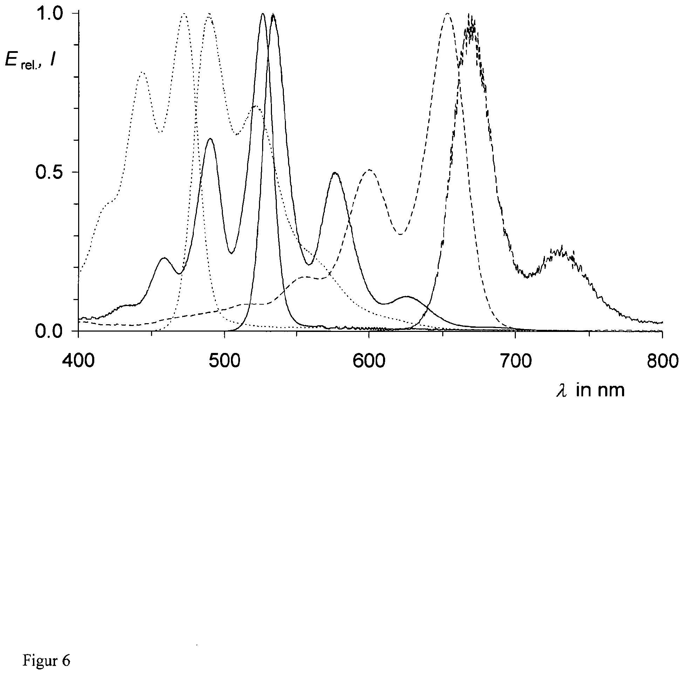

Das hier beschriebene Verfahren nutzt die Eigenfluoreszenz der Materialien aus. Man kann die Polymermaterialien zusätzlich mit Fluoreszenzmarkern dotieren; bei Dotierungskonzentrationen unter 0.02 ppm sind die Marker für das menschliche Auge unsichtbar. Für die Marker ist eine minimale Lichtechtheit erforderlich; werden Kunststoffe vor der Detektion geschreddert, ist dieses Problem wegen der Entstehung frischer Bruchflächen wenig gravierend. Als typische lichtechte Fluoreszenzfarbstoffe können Perylenderivate und andere *peri*-Arylene, wie z.B. **1** bis **3**, verwendet werden; für die UV/Vis-Absorptions- und Fluoreszenzspektren in Chloroform-Lösung siehe Figur 6.

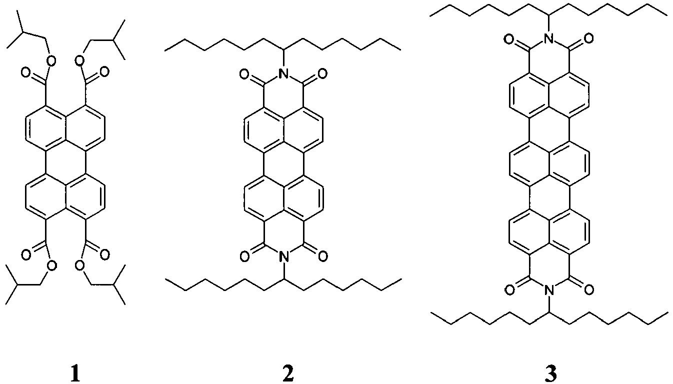

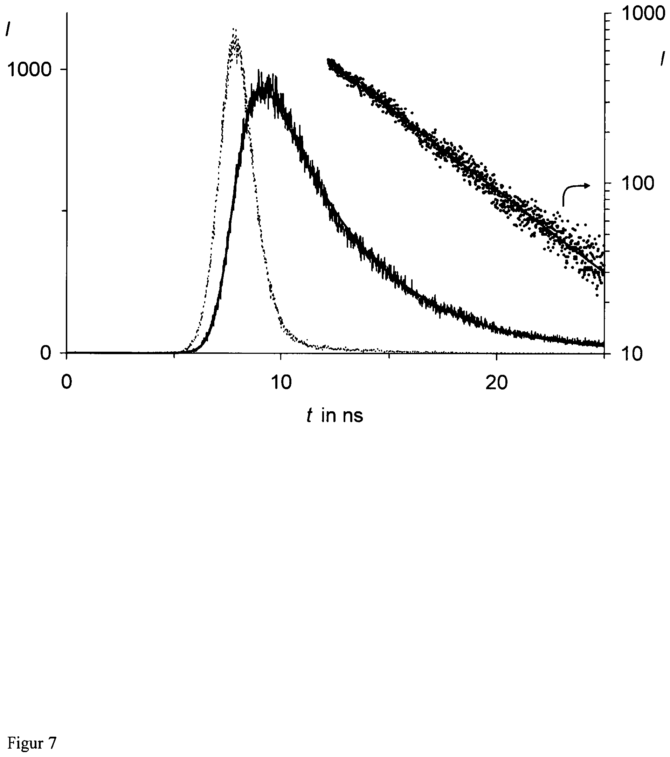

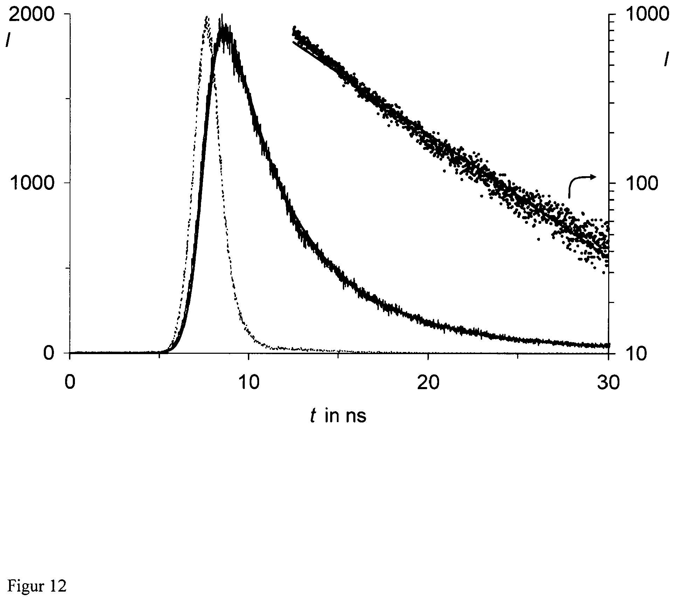

Wir haben als kurzwelliges, sichtbar fluoreszierendes Perylenderivat den Perylentetracarbonsäuretetraisobutylester **1** [6], für mittlere Wellenlängen das Bisimid **2** [7] und für längere Wellenlängen das Terrylenderivat **3** [8] verwendet - siehe Figur 12 -, die sich in ihren Fluoreszenzspektren erheblich unterscheiden - siehe Figur 6 -, und haben dadurch eine erstaunlich eindeutige weitere Markierungsmöglichkeit erzielt. Strahlt man kurzwelliger in die markierten Materialien ein, also beispielsweise bei 365 nm, aber auch bis 405 ein, dann erhält man die Eigenfluoreszenz des Polymers. Bei 365 nm wird praktisch kein Farbstoff optisch angeregt, und wir haben experimentell nahezu ausschließlich die dominierende Eigenfluoreszenz der Polymermaterialien gefunden; die Fluoreszenz der Marker bleibt unbedeutend. Strahlt man aber längerwellig in die langwelligen Absorptionsspektren der Farbstoffe ein - hier kann man auch 490 nm für alle Marker-Farbstoffe verwenden -, dann findet man praktisch nur die Fluoreszenz der Marker. Dies ist technologisch interessant, denn man kann z.B. auf diese Weise das Polymer-Grundmaterial durch eine kurzwellige Anregung über seine Eigenfluoreszenz identifizieren und dann über die Fluoreszenz zugesetzter Marker (z.B. **1** bis **3**) nach speziellen Chargen weiter sortieren. Da die Marker in gut unterscheidbaren Spektralbereichen fluoreszieren, können mehrere Marker gleichzeitig anwesend sein und unabhängig voneinander detektiert werden. Die Kodierung der Chargen kann dadurch auch binär erfolgen, indem z.B. ein Marker vorhanden ist, oder ein anderer oder auch beide u.s.w.; man erhält dadurch bei *n* Markern 2*ⁿ*-1 Codiermöglichkeiten (wenn undotiertes Material nicht berücksichtigt wird). Im konkreten Fall ergeben sich sieben Codiermöglichkeiten, die sieben unterschiedlichen Chargen der jeweiligen Polymere entsprechen können. Hier ist die Unterscheidung der Marker nach den Fluoreszenzwellenlängen vorgenommen worden. Darüber hinaus unterscheiden sich die Marker auch in ihren Fluoreszenzabklingzeiten, die für jede Marker-Polymer-Kombination charakteristisch ist; siehe Figur 7 bis 15. Man kann also entweder nach Wellenlängen oder nach Fluoreszenzabklingzeiten sortieren. Wenn man beide Kriterien einsetzt erhält man eine Redundanz, durch die die Sortiersicherheit weiter erhöht wird; dies kann bei speziellen Chargen aus hochwertigen Materialien eine besondere Bedeutung erhalten. Schließlich kann man auch undotiertes Material im Nachhinein mit Fluoreszenzfarbstoffe dotieren, z.B. durch Eindiffundieren aus flüssiger Phase oder über die Gasphase, oder auch über Schmelzvorgänge; hierüber lässt sich, z.B. durch Redundanz, die Sortiersicherheit bei Alt-Materialien noch ganz wesentlich erhöhen.

Das hier beschriebene Verfahren ist primär für das Recyclen von Kunststoffen entwickelt worden, es kann aber auch allgemein zur z.B. für vielfältige Markierungszwecke eingesetzt werden, indem es z.B. die Strichcode- oder QR-Code-Markierungen ersetzt; für die letzteren werden üblicherweise optisch lesbare Markierungen benötigt, während Fluoreszenzabklingzeiten auch bei beliebig lichtstreuenden Objekten bestimmt werden können. Die Markierung kann auch verdeckt oder partiell verdeckt angebracht werden und daher beispielsweise auch als Markierung gegen Produktpiraterie eingesetzt werden. Bei Kunststoff-Flaschen kann man durch das Einbringen der Marker in den Kunststoff eine besondere Sicherheit für deren Identifizierung erhalten, weil weder Etikett noch Aufschrift erforderlich sind, die verloren gehen können.

### Schlussfolgerung

Unter Verwendung der Fluoreszenzabklingzeit der Eigenfluoreszenz lassen sich Polymermaterialien eindeutig identifizieren und auf diesem Weg sortenrein maschinell sortieren. Wegen der hohen Geschwindigkeit des Erkennungsvorgangs sind Möglichkeiten für Sortieranlagen mit großem Materialdurchsatz eröffnet. Durch die Verwendung von phasenempfindlichen Detektoren und integralen Messungen kann der elektronische Aufwand für Detektionseinheiten günstig gestaltet werden. Weiterhin können Polymermaterialien für deren Detektion mit Fluoreszenzfarbstoffen, wie z.B. Perylenester, Perylenimide und Terrylenimide, markiert werden, die über ihre Fluoreszenz in unterschiedlichen Spektralbereichen erkannt werden, oder auch über die individuellen Fluoreszenzabklingzeiten in den diversen Polymermaterialien. Durch eine Binärkombination der Marker ist eine Vervielfachung der Detektionsmöglichkeiten gegeben. Die Identifikation kann hier sowohl über die Spektralbereiche als aber auch über die individuellen Abklingzeiten in den jeweiligen Polymeren realisiert werden kann.
[1] (a) E. Nemeth, G. Schubert, V. Albrecht, F. Simon, Aufbereitungs Tech. 2005, 46, 35-46. (b) E. Nemeth, F. Simon, V. Albrecht, G. Schubert, Ger. Patent (2006), DE 102004024754 B3 (12.5.2004); Chem. Abstr. 2006, 144, 392348. (d) U. Gohs, V. Albrecht, K. Husemann, E. Reinsch, R. Schuenemann, F. Simon, Ger. Offen. (2009), DE 102007055765 A1 (11.12.2007); Chem. Abstr. 2009, 151:57663.
[2] H. Langhals, T. Schmid, M. Herman, M. Zwiener, A. Hofer, Int. J. Environm. Engin. Sci. Technol. Res. 2013, 7, 124-132.
[3] (a) H. Langhals, T. Schmid, M. Herman, M. Zwiener, A. Hofer, Ger. Offen. DE 102012012772.3 (22.6.2012). (b) General Electric (Erf. S. Hubbard, R. Potyrailo, P. Schottland, V. Thomas), US-Pat. 2005/0095715 (5.5.2005).
[4] H. Langhals, T. Schmid, M. Herman, M. Zwiener, A. Hofer, Ger. Offen. DE 102012012772.3 (June 22, 2012); Chem. Abstr. 2013, 160, 63983.
[5] (a) R. M. Ballew, J. N. Demas, Anal. Chem. 1989, 61, 30-33. (b) R. J. Woods, S. Scypinski, L. J. Cline Love, H. A. Ashworth, Anal. Chem. 1984, 56, 1395-1400. (c) R. J. Meier, L. H. Fischer, O. S. Wolfbeis, M. Schäferling, Sensors and Actuators B 2013, 177, 500-506.
[6] S. Alibert-Fouet, I. Seguy, J.-F. Bobo, P. Destruel, H. Bock, Chem. Europ. J. 2007, 13, 1746-1753.
[7] S. Demmig, H. Langhals, Chem. Ber. 1988, 121, 225-230.
[8] (a) H. Langhals, S. Poxleitner, Eur. J. Org. Chem. 2008, 797-800. (b) H. Langhals, A. Walter, E. Rosenbaum, L. B.-Å. Johansson, Phys. Chem. Chem. Phys. 2011, 13, 11055-11059.

### Gegenstand der Erfindung

a. Verwendung der individuellen Fluoreszenzabklingzeiten der Eigenfluoreszenz (Autofluoreszenz) von Polymeren zu deren Detektion, bevorzugt zu deren Detektion für das sortenreine Sortieren zum Recycling.
b. Verwendung von Perylentetracarbonsäurebisimiden der allgemeinen Formel 4 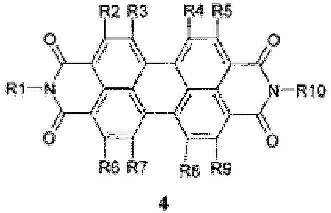 zur Fluoreszenzcodierung von makromolekularen Stoffen zu deren eindeutigen Identifizierung über die Fluoreszenzabklingzeit, wobei die Reste R¹ bis R¹⁸ gleich oder verschieden voneinander sein können und unabhängig voneinander Wasserstoff oder lineare Alkylreste mit mindestens einem und höchstens 37 C-Atome bedeuten, bei denen eine bis 10 CH₂-Einheiten unabhängig voneinander ersetzt sein können durch jeweils Carbonylgruppen, Sauerstoffatome, Schwefelatome, Selenatome, Telluratome, *cis*- oder *trans*-CH=CH-Gruppen, bei der eine CH-Einheit auch durch ein Stickstoffatom ersetzt sein kann, acetylenische C≡C-Gruppen 1,2-, 1,3- oder 1,4-substituierten Phenylreste, 2,3-, 2,4-, 2,5-, 2,6-, 3,4- oder 3,5-disubstituierte Pyridinreste, 2,3-, 2,4-, 2,5- oder 3,4- disubstituierte Thiophenreste, 1,2-, 1,3-, 1,4-, 1,5-, 1,6-, 1,7-, 1,8-, 2,3-, 2,6- oder 2,7- disubstituierte Naphthalinreste, bei denen ein oder zwei CH-Gruppen durch Stickstoffatome ersetzt sein können, 1,2-, 1,3-, 1,4-, 1,5-, 1,6-, 1,7-, 1,8-, 1,9-, 1,10-, 2,3-, 2,6-, 2,7-, 2,9-, 2,10- oder 9,10-disubstituierte Anthracenreste, bei denen ein oder zwei CH-Gruppen durch Stickstoffatome ersetzt sein können. Bis zu 12 einzelne Wasserstoffatome der CH₂-Gruppen können jeweils unabhängig voneinander auch an gleichen C-Atomen ersetzt sein durch die Halogene Fluor, Chlor, Brom oder lod oder die Cyanogruppe oder eine lineare Alkylkette mit bis zu 18 C-Atomen, bei der eine bis 6 CH₂-Einheiten unabhängig voneinander ersetzt sein können durch Carbonylgruppen, Sauerstoffatome, Schwefelatome, Selenatome, Telluratome, *cis*- oder *trans*-CH=CH-Gruppen, bei denen eine CH-Einheit auch durch ein Stickstoffatom ersetzt sein kann, acetylenische C≡C-Gruppen, 1,2-, 1,3- oder 1,4-substituierte Phenylreste, 2,3-, 2,4-, 2,5-, 2,6-, 3,4- oder 3,5-disubstituierte Pyridinreste, 2,3-, 2,4-, 2,5- oder 3,4-disubstituierter Thiophenreste, 1,2-, 1,3-, 1,4-, 1,5-, 1,6-, 1,7-, 1,8-, 2,3-, 2,6- oder 2,7-disubstituierte Naphthalinreste, bei denen ein oder zwei Kohlenstoffatome durch Stickstoffatome ersetzt sein können, 1,2-, 1,3-, 1,4-, 1,5-, 1,6-, 1,7-, 1,8-, 1,9-, 1,10-, 2,3-, 2,6-, 2,7-, 2,9-, 2,10- oder 9,10-disubstituierte Anthracenreste, bei denen ein oder zwei Kohlenstoffatome durch Stickstoffatome ersetzt sein können. Bis zu 12 einzelne Wasserstoffatome der CH₂- Gruppen der Alkylreste können jeweils unabhängig voneinander auch an gleichen C- Atomen ersetzt sein durch die Halogene Fluor, Chlor, Brom oder lod oder Cyanogruppen oder lineare Alkylketten mit bis zu 18 C-Atomen, bei denen eine bis 6 CH₂-Einheiten unabhängig voneinander ersetzt sein können durch Carbonylgruppen, Sauerstoffatome, Schwefelatome, Selenatome, Telluratome, *cis*- oder *trans*-CH=CH-Gruppen, bei der eine CH-Einheit auch durch ein Stickstoffatom ersetzt sein kann, acetylenische C≡C -Gruppen 1,2-, 1,3- oder 1,4-substituierte Phenylreste, 2,3-, 2,4-, 2,5-, 2,6-, 3,4- oder 3,5- disubstituierte Pyridinreste, 2,3-, 2,4-, 2,5- oder 3,4-disubstituierte Thiophenreste, 1,2-, 1,3-, 1,4-, 1,5-, 1,6-, 1,7-, 1,8-, 2,3-, 2,6- oder 2,7-disubstituierte Naphthalinreste, bei denen ein oder zwei Kohlenstoffatome durch Stickstoffatome ersetzt sein können, 1,2-, 1,3-, 1,4-, 1,5-, 1,6-, 1,7-, 1,8-, 1,9-, 1,10-, 2,3-, 2,6-, 2,7-, 2,9-, 2,10- oder 9,10- disubstituierte Anthracenreste, bei denen ein oder zwei Kohlenstoffatome durch Stickstoffatome ersetzt sein können. Statt Substituenten zu tragen können die freien Valenzen der Methingruppen bzw. der quartären C-Atome paarweise verknüpft werden, so dass Ringe entstehen, wie z.B. Cyclohexanringe. Die Reste R¹ bis R⁹ können außerdem unabhängig voneinander die Halogenatome F, Cl, Br oder I bedeuten.
c. Verwendung von Terrylentetracarbonsäurebisimiden der allgemeinen Formel 5 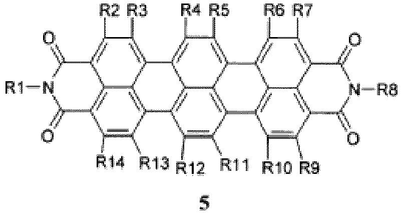 zur Fluoreszenzcodierung über die Fluoreszenzabklingzeit, wobei die Reste R¹ bis R¹⁴ die unter b angegebene Bedeutung haben.
d. Verwendung von Perylentetracarbonsäurederivaten der allgemeinen Formel 6 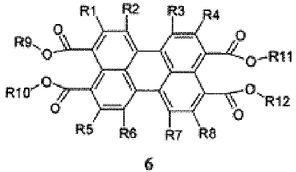 zur Fluoreszenzcodierung über die Fluoreszenzabklingzeit, wobei die Reste R¹ bis R¹² die unter b angegebene Bedeutung haben.
e. Verwendung dadurch **gekennzeichnet**, dass die Perylenderivate nach b bis d in kleiner Konzentration in Polymermaterialien eingebracht und über ihre Fluoreszenzabklingzeit detektiert werden, bevorzugte Konzentrationen liegen zwischen 1 ppb und 100 ppm, am meisten bevorzugt sind Konzentrationen zwischen 1 und 100 ppb.
f. Verwendung gemäß a-d dadurch **gekennzeichnet**, dass zur Fluoreszenzanregunggepulste Lichtquellen verwendet werden, bevorzugte Lichtquellen sind Halbleiterlichtquellen, wie Laserdioden und Leuchtdioden, bevorzugt Galliumnitrid enthaltend, oder auch Gasentladungslampen.
g. Verwendung gemäß a-d dadurch **gekennzeichnet**, dass die Detektion unter Verwendung phasenempfindlicher Detektoren erfolgt.
h. **Verwendung** der Fluoreszenzabklingzeit nach a zur Detektion von Polymermaterialien dadurch gekennzeichnet, dass zum Anregen zur Fluoreszenz periodisch gepulste Lichtquellen verwendet werden und dass das Fluoreszenzsignal akkumuliert und gemittelt wird.
i. **Verwendung** der Fluoreszenzabklingzeit nach b bis d zur Codierung von Polymermaterialien dadurch gekennzeichnet, dass zum Anregen zur Fluoreszenz periodisch gepulste Lichtquellen verwendet werden und dass das Fluoreszenzsignal akkumuliert und gemittelt wird.
j. **Verwendung** der Fluoreszenzabklingzeit nach a zur Detektion von Polymermaterialien zur sortenreinen Trennung zwecks Recycling, bevorzugte Polymermaterialien sind Thermoplaste, und unter diesen insbesondere bevorzugt Polyoxymethylen (POM), Polystyrol (PS), Polyamid (PA), Polyethylenterephthalat (PET), Polycarbonat (PC), Polyethylen (PE), Polypropylen (PP), Polyvinylchlorid (PVC), Polyetherketon (PEK), oder auch Aramide, Kapton, Polysulfon.
k. **Verwendung** der Fluoreszenzabklingzeit nach b bis d zur Codierung von Polymermaterialien zur sortenreinen Trennung zwecks Recycling, bevorzugte Polymermaterialien sind Thermoplaste, und unter diesen insbesondere bevorzugt Polyoxymethylen (POM), Polystyrol (PS), Polyamid (PA), Polyethylenterephthalat (PET), Polycarbonat (PC), Polyethylen (PE), Polypropylen (PP), Polyvinylchlorid (PVC), Polyetherketon (PEK), oder auch Aramide, Kapton, Polysulfon.
l. **Verwendung** der Fluoreszenzabklingzeit nach b bis d zur Codierung von Polymermaterialien mir deren Wiedererkennung von Gegenständen mir deren eindeutige Identifizierung, auch im Sinne der Markierung gegen Produktpiraterie.

Figur 1. Fluoreszenzspektren der Polymermaterialen unter optischer Anregung bei 356 nm. Delrin: gestichelte Kurve, Luran: gepunktete Kurve. Ultramid: durchgezogene Kurve.
Figur 2. Fluoreszenzabklingverhalten von Luran. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

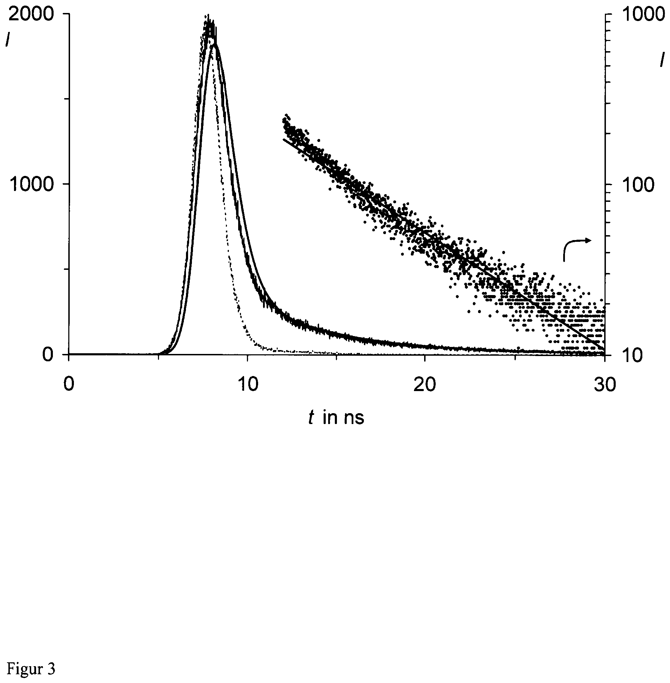

Figur 3. Fluoreszenzabklingverhalten von Delrin. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

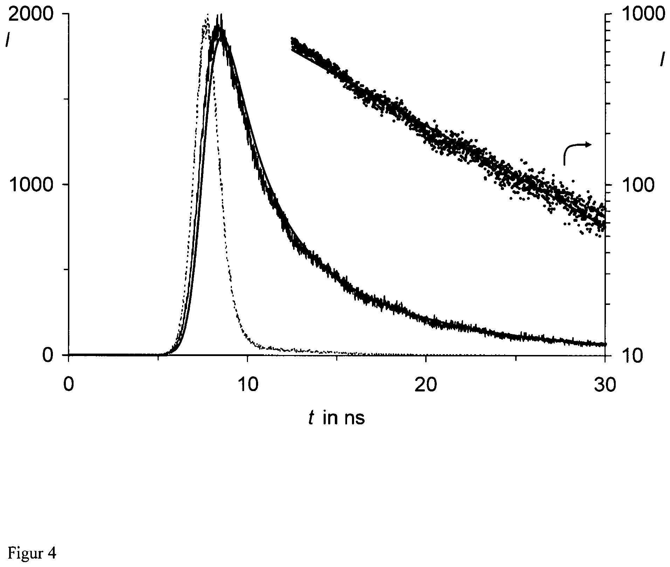

Figur 4. Fluoreszenzabklingverhalten von Ultramid. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.
Figur 5. Übersicht über den zeitlichen Intensitätsverlauf der Anregungslampe (gepunktete Linie, links). und von links nach rechtes die dekonvolutierten Funktionen von Delrin (durchgezogene Kurve), Ultramis (gepunktete Kurve) und Luran (gestrichelte Kurve)
Figur 6. Von links nach rechts: UV/Vis-Absorptios- (jeweils links) und Fluoreszenzspektren (jeweils rechts) des Perylenesters **1** (gepunktet), des Perylenimids **2** (durchgezogen) und des Terrylenimids **3** (gestrichelt) in Chloroform.
Figur 7. Fluoreszenzabklingverhalten des Esters **1** in Luran; Fluoreszenzanregung bei 490 nm, Detektion bei 573 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

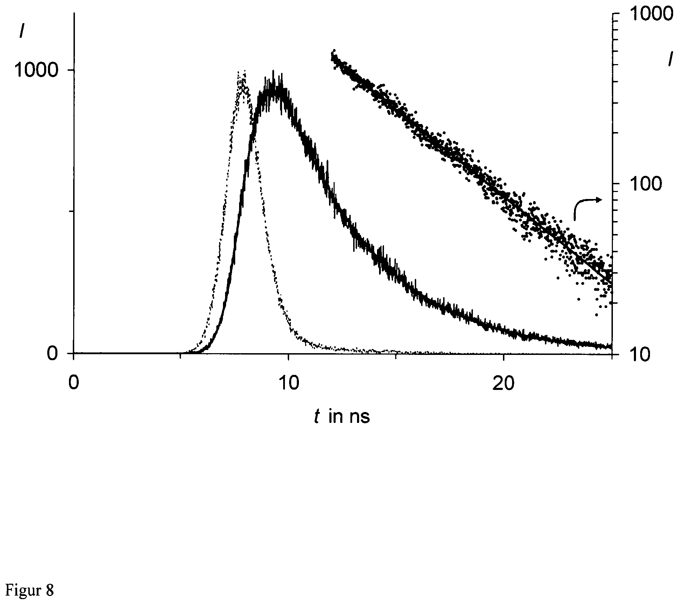

Figur 8. Fluoreszenzabklingverhalten des Esters **1** in Delrin; Fluoreszenzanregung bei 490 nm, Detektion bei 573 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

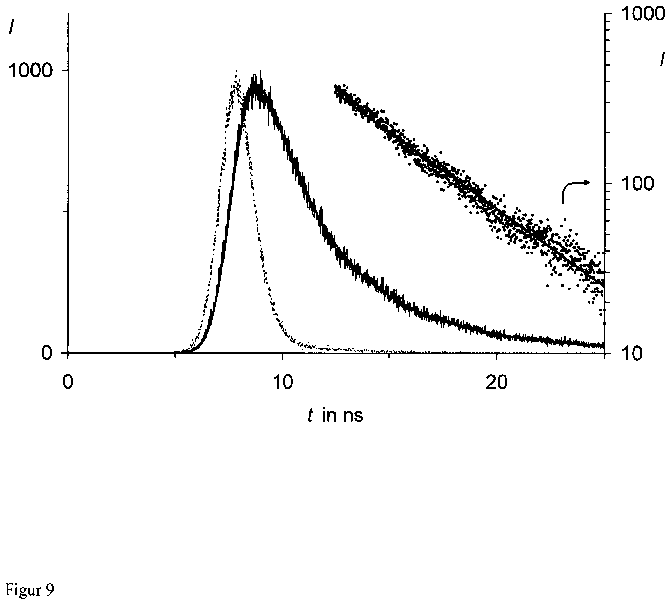

Figur 9. Fluoreszenzabklingverhalten des Esters **1** in Ultramid; Fluoreszenzanregung bei 490 nm, Detektion bei 573 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

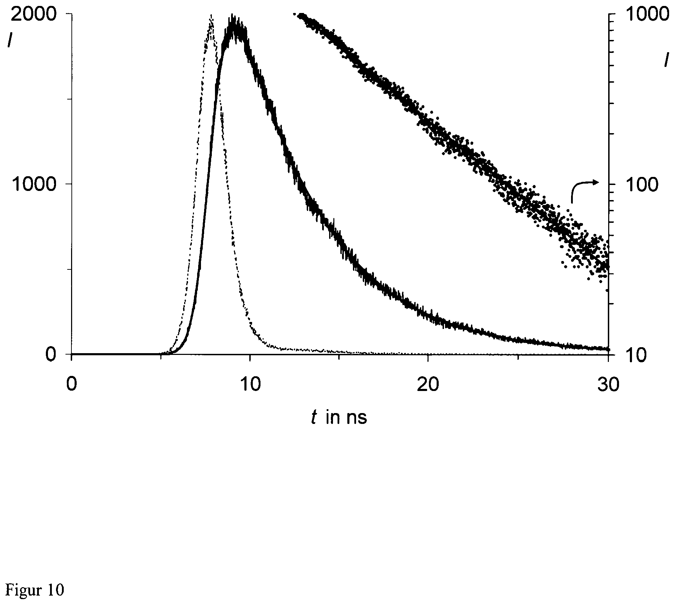

Figur 10. Fluoreszenzabklingverhalten von S-13 (**2**) in Luran; Fluoreszenzanregung bei 490 nm, Detektion bei 573 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

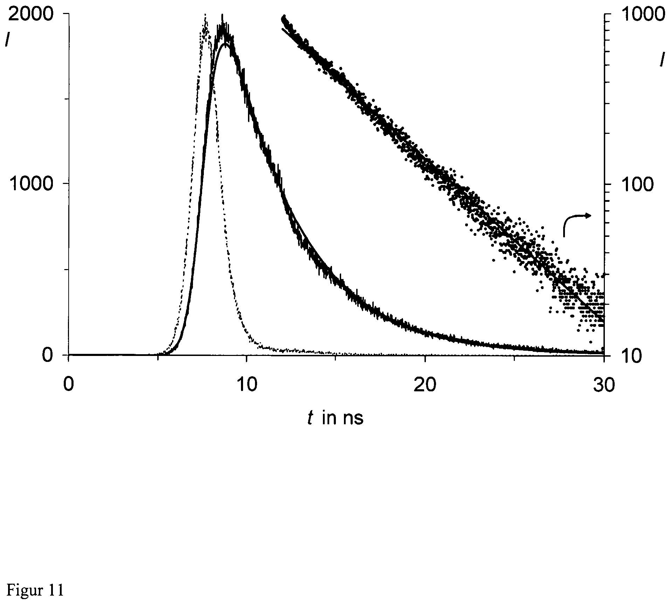

Figur 11. Fluoreszenzabklingverhalten von S-13 (**2**) in Delrin; Fluoreszenzanregung bei 490 nm, Detektion bei 573 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.
Figur 12. Fluoreszenzabklingverhalten von S-13 (**2**) in Ultramid; Fluoreszenzanregung bei 490 nm, Detektion bei 573 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

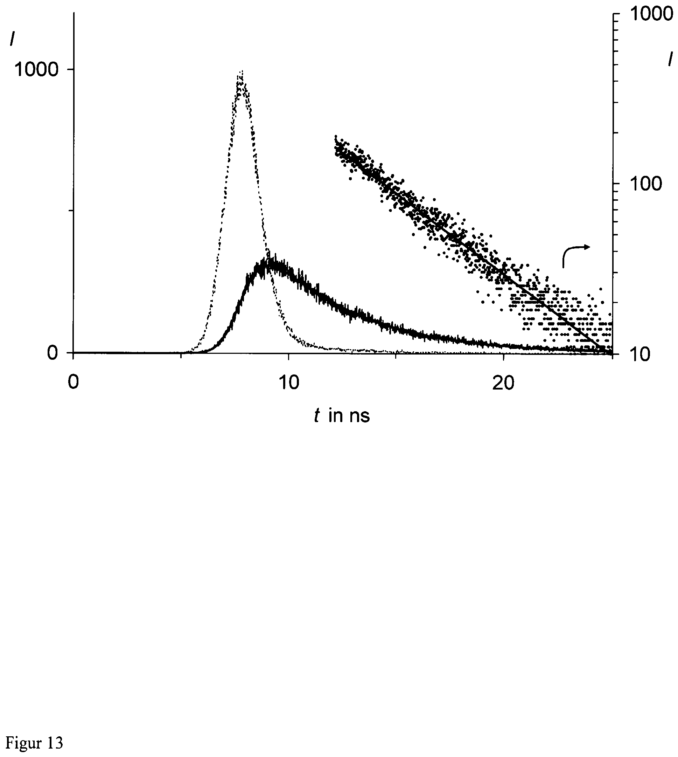

Figur 13. Fluoreszenzabklingverhalten des Terrylens **3** in Luran; Fluoreszenzanregung bei 490 nm, Detektion bei 667 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

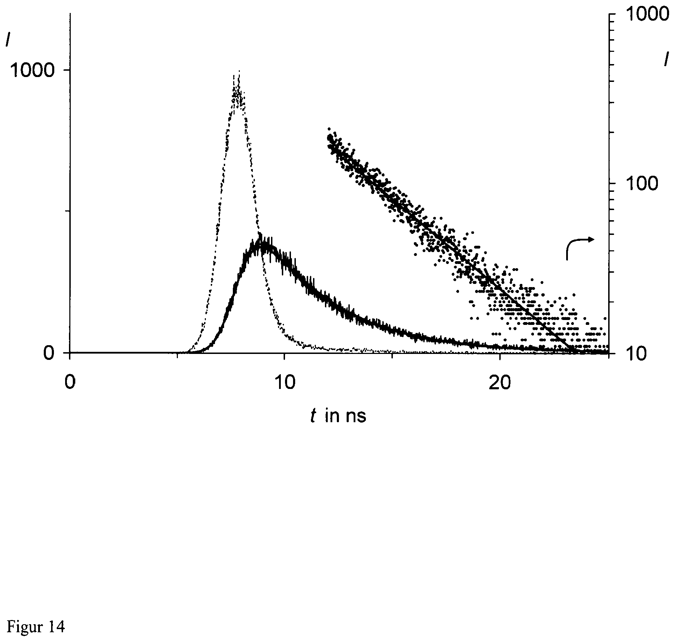

Figur 14. Fluoreszenzabklingverhalten des Terrylens **3** in Delrin; Fluoreszenzanregung bei 490 nm, Detektion bei 667 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

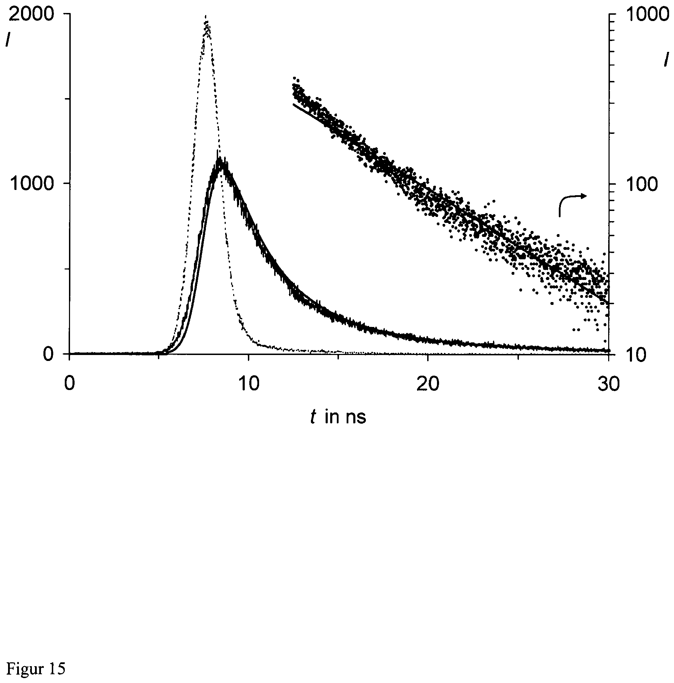

Figur 15. Fluoreszenzabklingverhalten des Terrylens **3** in Ultramid; Fluoreszenzanregung bei 490 nm, Detektion bei 667 nm. Gepunktete Kurve: zeitlicher Intensitätsverlauf der Anregungslampe. Durchgezogene, verrauschte Kurve: Zeitverlauf der Eigenfluoreszenz mit dekonvolutierter Funktion als ausgleichende Kurve (überwiegend von der Meßkurve überdeckt). Rechts: Ausschnitt der Fluoreszenzabklingkurve und Ausgleichsfunktion bei logarithmischer Auftragung.

## Patentansprüche

1. Verwendung der individuellen Fluoreszenzabklingzeiten der Eigenfluoreszenz (Autofluoreszenz) von Polymeren zu deren Detektion, bevorzugt zu deren Detektion für das sortenreine Sortieren zum Recycling.

2. Verwendung von Perylentetracarbonsäurebisimiden der allgemeinen Formel 4 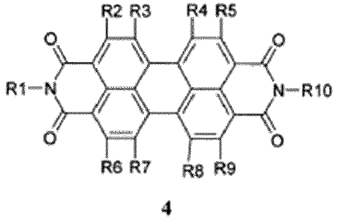 zur Fluoreszenzcodierung von makromolekularen Stoffen zu deren eindeutigen Identifizierung über die Fluoreszenzabklingzeit, wobei die Reste R¹ bis R¹⁸ gleich oder verschieden voneinander sein können und unabhängig voneinander Wasserstoff oder lineare Alkylreste mit mindestens einem und höchstens 37 C-Atome bedeuten, bei denen eine bis 10 CH₂-Enheiten unabhängig voneinander ersetzt sein können durch jeweils Carbonylgruppen, Sauerstoffatome, Schwefelatome, Selenatome, Telluratome, *cis*- oder *trans*-CH=CH-Gruppen, bei der eine CH-Einheit auch durch ein Stickstoffatom ersetzt sein kann, acetylenische C≡C-Gruppen 1,2, 1,3- oder 1,4-substituierten Phenylreste, 2,3-, 2,4-, 2,5-, 2,6-, 3,4- oder 3,5-disubstituierte Pyridinreste, 2,3-, 2,4-, 2,5- oder 3,4-disubstituierte Thiophenreste, 1,2-, 1,3-, 1,4-, 1,5-, 1,6-, 1,7-, 1,8-, 2,3-, 2,6- oder 2,7-disubstituierte Naphthalinreste, bei denen ein oder zwei CH-Gruppen durch Stickstoffatome ersetzt sein können, 1,2-, 1,3-, 1,4-, 1,5-, 1,6-, 1,7-, 1,8-, 1,9-, 1,10-, 2,3-, 2,6-, 2,7-, 2,9-, 2,10- oder 9,10-disubstituierte Anthracenreste, bei denen ein oder zwei CH-Gruppen durch Stickstoffatome ersetzt sein können. Bis zu 12 einzelne Wasserstoffatome der CH₂- Gruppen können jeweils unabhängig voneinander auch an gleichen C-Atomen ersetzt sein durch die Halogene Fluor, Chlor, Brom oder Iod oder die Cyanogruppe oder eine lineare Alkylkette mit bis zu 18 C-Atomen, bei der eine bis 6 CH₂-Einheiten unabhängig voneinander ersetzt sein können durch Carbonylgruppen, Sauerstoffatome, Schwefelatome, Selenatome, Telluratome, *cis*- oder *trans*-CH=CH-Gruppen, bei denen eine CH-Einheit auch durch ein Stickstoffatom ersetzt sein kann, acetylenische C≡C-Gruppen, 1,2-, 1,3- oder 1,4-substituierte Phenylreste, 2,3-, 2,4-, 2,5-, 2,6-, 3,4- oder 3,5-disubstituierte Pyridinreste, 2,3-, 2,4-, 2,5- oder 3,4-disubstituierter Thiophenreste, 1,2-, 1,3-, 1,4-, 1,5-,1.6-, 1,7-, 1,8-, 2,3-, 2,6- oder 2,7-disubstituierte Naphthalinreste, bei denen ein oder zwei Kohlenstoffatome durch Stickstoffatome ersetzt sein können, 1,2-, 1,3-, 1,4-, 1,5-, 1,6-, 1.7-, 1,8-, 1,9-, 1,10-, 2,3-, 2,6-, 2,7-, 2,9-, 2,10- oder 9,10-disubstituierte Anthracenreste, bei denen ein oder zwei Kohlenstoffatome durch Stickstoffatome ersetzt sein können. Bis zu 12 einzelne Wasserstoffatome der CH₂-Gruppen der Alkylreste können jeweils unabhängig voneinander auch an gleichen C-Atomen ersetzt sein durch die Halogene Fluor, Chlor, Brom oder Iod oder Cyanogruppen oder lineare Alkylketten mit bis zu 18 C-Atomen, bei denen eine bis 6 CH₂-Einheiten unabhängig voneinander ersetzt sein können durch Carbonylgruppen, Sauerstoffatome, Schwefelatome, Selenatome, Telluratome, *cis*- oder *trans-* CH=CH-Gruppen, bei der eine CH-Einheit auch durch ein Stickstoffatom ersetzt sein kann, acetylenische C≡C-Gruppen 1,2-, 1,3- oder 1 ,4-substituierte Phenylreste, 2,3-, 2,4-, 2,5-, 2,6-, 3,4- oder 3,5-disubstituierte Pyridinreste, 2,3-, 2,4-, 2,5- oder 3,4- disubstituierte Thiophenreste, 1,2-, 1,3-, 1,4-, 1,5-, 1,6-, 1,7-, 1,8-, 2,3-, 2,6- oder 2,7- disubstituierte Naphthalinreste, bei denen ein oder zwei Kohlenstoffatome durch Stickstoffatome ersetzt sein können, 1,2-, 1,3-, 1,4-, 1,5-, 1,6-, 1,7-, 1,8-, 1,9-, 1,10-, 2,3-, 2,6-, 2,7-, 2,9-, 2,10- oder 9,10-disubstituierte Anthracenreste, bei denen ein oder zwei Kohlenstoffatome durch Stickstoffatome ersetzt sein können. Statt Substituenten zu tragen können die freien Valenzen der Methingruppen bzw. der quartären C-Atome paarweise verknüpft werden, so dass Ringe entstehen, wie z.B. Cyclohexanringe. Die Reste R¹ bis R⁹ können außerdem unabhängig voneinander die Halogenatome F, Cl, Br oder I bedeuten.

3. Verwendung von Terrylentetracarbonsäurebisimiden der allgemeinen Formel 5 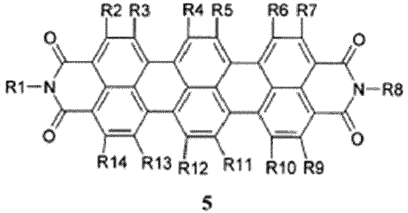 zur Fluoreszenzcodierung über die Fluoreszenzabklingzeit, wobei die Reste R¹ bis R¹⁴ die unter Anspruch 2 angegebene Bedeutung haben.

4. Verwendung von Perylentetracarbonsäurederivaten der allgemeinen Formel 6 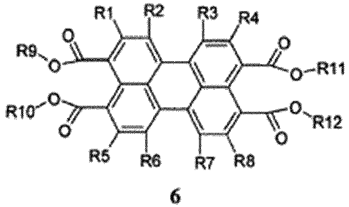 zur Fluoreszenzcodierung über die Fluoreszenzabklingzeit, wobei die Reste R¹ bis R¹² die unter Anspruch 2 angegebene Bedeutung haben.

5. Verwendung gemäß einem der Ansprüche 2-4 **dadurch gekennzeichnet, dass** die Perylenderivate in kleiner Konzentration in Polymermaterialien eingebracht und über ihre Fluoreszenzabklingzeit detektiert werden; bevorzugte Konzentrationen liegen zwischen 1 ppb und 100 ppm, am meisten bevorzugt sind Konzentrationen zwischen 1 und 100 ppb.

6. Verwendung gemäß einem der Ansprüche 1-4 **dadurch gekennzeichnet, dass** zur Fluoreszenzanregung gepulste Lichtquellen verwendet werden; bevorzugte Lichtquellen sind Halbleiterlichtquellen, wie Laserdioden und Leuchtdioden, bevorzugt Galliumnitrid enthaltend, oder auch Gasentladungslampen.

7. Verwendung gemäß einem der Ansprüche 1-4 **dadurch gekennzeichnet, dass** die Detektion unter Verwendung phasenempfindlicher Detektoren erfolgt.

8. Verwendung der Fluoreszenzabklingzeit nach Anspruch 1 zur Detektion von Polymermaterialien **dadurch gekennzeichnet, dass** zum Anregen zur Fluoreszenz periodisch gepulste Lichtquellen verwendet werden und dass das Fluoreszenzsignal ackumuliert und gemittelt wird.

9. Verwendung der Fluoreszenzabklingzeit nach einem der Ansprüche 2 bis 4 zur Codierung von Polymermaterialien **dadurch gekennzeichnet, dass** zum Anregen zur Fluoreszenz periodisch gepulste Lichtquellen verwendet werden und dass das Fluoreszenzsignal akkumuliert und gemittelt wird.

10. Verwendung der Fluoreszenzabklingzeit nach Anspruch 1 zur Detektion von Polymermaterialien zur sortenreinen Trennung zwecks Recycling; bevorzugte Polymermaterialien sind Thermoplaste, und unter diesen insbesondere bevorzugt Polyoxymethylen (POM), Polystyrol (PS), Polyamid (PA), Polyethylenterephthalat (PET), Polycarbonat (PC), Polyethylen (PE), Polypropylen (PP), Polyvinylchlorid (PVC), Polyetherketon (PEK), oder auch Aramide, Kapton, Polysulfon.

11. Verwendung der Fluoreszenzabklingzeit nach einem der Ansprüche 2 bis 4 zur Codierung von Polymermaterialien zur sortenreinen Trennung zwecks Recycling; bevorzugte Polymermaterialien sind Thermoplaste, und unter diesen insbesondere bevorzugt Polyoxymethylen (POM), Polystyrol (PS), Polyamid (PA), Polyethylenterephthalat (PET), Polycarbonat (PC), Polyethylen (PE), Polypropylen (PP), Polyvinylchlorid (PVC), Polyetherketon (PEK), oder auch Aramide, Kapton, Polysulfon.

12. Verwendung der Fluoreszenzabklingzeit nach einem der Ansprüche 2 bis 4 zur Codierung von Polymermaterialien für deren Wiedererkennung von Gegenständen für deren eindeutige Identifizierung, auch im Sinne der Markierung gegen Produktpiraterie.

## Claims

1. Use of the individual fluorescence decay times of the intrinsic fluorescence (auto-fluorescence) of polymers for the detection thereof, preferably for the detection thereof for homogeneous sorting for recycling.

2. Use of perylene tetracarboxylic acid bisimides of the general formula 4 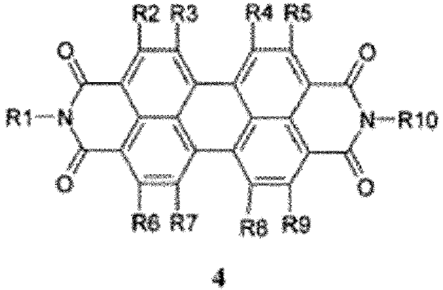 for fluorescence encoding of macromolecular materials for the clear identification thereof via the fluorescence decay time, wherein the residues R¹ to R¹⁸ may be identical to or different from each other and independently of each other represent hydrogen or linear alkyl residues having at least one and a maximum of 37 C atoms in which one to ten CH₂-units can be replaced independently of each other in each case by means of carbonyl groups, oxygen atoms, sulphur atoms, selenium atoms, tellurium atoms, *cis*- or *trans*-CH=CH groups, in which a CH unit can also be replaced by a nitrogen atom, acetylenic C≡C groups 1,2, 1,3 or 1,4-substituted phenyl residues, 2,3, 2,4, 2,5, 2,6, 3,4 or 3,5-disubstituted pyridine residues, 2,3, 2,4, 2,5 or 3,4-disubstituted thiophene residues, 1,2, 1,3, 1,4, 1,5, 1,6, 1,7, 1,8, 2,3, 2,6 or 2,7-disubstituted naphthalene residues, in which one or two CH groups can be replaced by nitrogen atoms, 1,2, 1,3, 1,4, 1,5, 1,6, 1,7, 1,8, 1,9, 1,10, 2,3, 2,6, 2,7, 2,9, 2,10 or 9,10-disubstituted anthracene residues, in which one or two CH groups can be replaced by nitrogen atoms, up to 12 individual hydrogen atoms of the CH₂ groups may in each case also be replaced independently of each other on identical C atoms by the halogens fluorine, chlorine, bromine or iodine or the cyano group or a linear alkyl chain with up to 18 C atoms, in which 1 to 6 CH₂ units can be replaced independently of each other by carbonyl groups, oxygen atoms, sulphur atoms, selenium atoms, tellurium atoms *cis*- or *trans-*CH=CH groups in which a CH unit can also be replaced by a nitrogen atom, acetylenic C≡C groups 1,2, 1,3 or 1,4-substituted phenyl residues, 2,3, 2,4, 2,5, 2,6, 3,4 or 3,5-disubstituted pyridine residues, 2,3, 2,4, 2,5 or 3,4-disubstituted thiophene residues, 1,2, 1,3, 1,4, 1,5, 1,6, 1,7, 1,8, 2,3, 2,6 or 2,7-disubstituted naphthalene residues in which one or two carbon atoms can be replaced by nitrogen atoms, 1,2, 1,3, 1,4, 1,5, 1,6, 1,7, 1,8, 1,9, 1,10, 2,3, 2,6, 2,7, 2,9, 2,10 or 9,10-disubstituted anthracene residues, in which one or two carbon atoms can be replaced by nitrogen atoms, up to 12 individual hydrogen atoms of the CH₂ groups of the alkyl residues may in each case also be replaced independently of each other on identical C atoms by the halogens fluorine, chlorine, bromine or iodine or cyano groups or linear alkyl chains with up to 18 C atoms, in which 1 to 6 CH₂ units can be replaced independently of each other by carbonyl groups, oxygen atoms, sulphur atoms, selenium atoms, tellurium atoms, *cis*- or *trans*-CH=CH groups, in which a CH unit can also be replaced by a nitrogen atom, acetylenic C≡C groups 1,2, 1,3 or 1,4-substituted phenyl residues, 2,3, 2,4, 2,5, 2,6, 3,4 or 3,5-disubstituted pyridine residues, 2,3, 2,4, 2,5 or 3,4-disubstituted thiophene residues, 1,2, 1,3, 1,4, 1,5, 1,6, 1,7, 1,8, 2,3, 2,6 or 2,7-disubstituted naphthalene residues, in which one or two carbon atoms can be replaced by nitrogen atoms, 1,2, 1,3, 1,4, 1,5, 1,6, 1,7, 1,8, 1,9, 1,10, 2,3, 2,6, 2,7, 2,9, 2,10 or 9,10-disubstituted anthracene residues, in which one or two carbon atoms can be replaced by nitrogen atoms, instead of carrying substituents, the free valences of the methine groups or the quaternary C-atoms can be linked in pairs so that rings are produced, such as, for example, cyclohexane rings, the residues R¹ to R⁹ may further independently of each other represent the halogen atoms F, Cl, Br or I.

3. Use of terrylene tetracarboxylic acid bisimides of the general formula 5 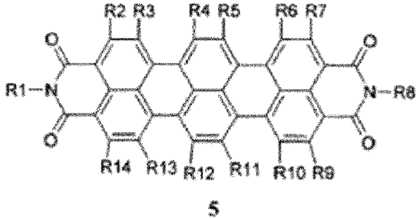 for fluorescence encoding via the fluorescence decay time, wherein the residues R¹ to R¹⁴ have the meaning set out under claim 2.

4. Use of perylene tetracarboxylic acid derivatives of the general formula 6 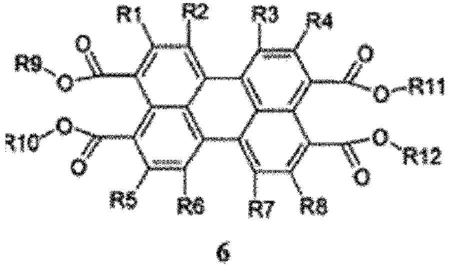 for fluorescence encoding via the fluorescence decay time, wherein the residues R¹ to R¹² have the meaning set out under claim 2.

5. Use according to any one of claims 2 to 4, **characterised in that** the perylene derivatives are introduced into polymer materials in small concentrations and are detected by means of their fluorescence decay time; preferred concentrations are between 1 ppb and 100 ppm, most preferred are concentrations between 1 and 100 ppb.

6. Use according to any one of claims 1 to 4, **characterised in that** pulsed light sources are used to excite fluorescence; preferred light sources are semi-conductor light sources, such as laser diodes and light-emitting diodes, preferably containing gallium nitride, or also gas discharge lamps.

7. Use according to any one of claims 1 to 4, **characterised in that** the detection is carried out using phase-sensitive detectors.

8. Use of the fluorescence decay time according to claim 1 for detecting polymer materials, **characterised in that** periodically pulsed light sources are used to excite fluorescence and **in that** the fluorescence signal is accumulated and averaged.

9. Use of the fluorescence decay time according to any one of claims 2 to 4 for encoding polymer materials, **characterised in that** periodically pulsed light sources are used to excite fluorescence and **in that** the fluorescence signal is accumulated and averaged.

10. Use of the fluorescence decay time according to claim 1 for detecting polymer materials for homogeneous separation for the purposes of recycling; preferred polymer materials are thermoplastics, and including particularly preferably polyoxymethylene (POM), polystyrene (PS), polyamide (PA), polyethylene terephthalate (PET), polycarbonate (PC), polyethylene (PE), polypropylene (PP), polyvinylchloride (PVC), polyetherketone (PEK) or also aramids, Kapton, polysulphone.

11. Use of the fluorescence decay time according to any one of claims 2 to 4 for encoding polymer materials for homogeneous separation for the purposes of recycling; preferred polymer materials are thermoplastics, and including particularly preferably polyoxymethylene (POM), polystyrene (PS), polyamide (PA), polyethylene terephthalate (PET), polycarbonate (PC), polyethylene (PE), polypropylene (PP), polyvinylchloride (PVC), polyetherketone (PEK) or also aramids, Kapton, polysulphone.

12. Use of the fluorescence decay time according to any one of claims 2 to 4 for encoding polymer materials for the recognition of objects for the unambiguous identification thereof, also in the context of marking against product piracy.

## Revendications

1. Utilisation des durées de décroissance de fluorescence de la fluorescence propre (auto-fluorescence) de polymères pour leur détection, de préférence pour leur détection pour le tri selon leur type pour le recyclage.

2. Utilisation de bisimides de pérylène d'acide tétracarboxylique de formule générale 4 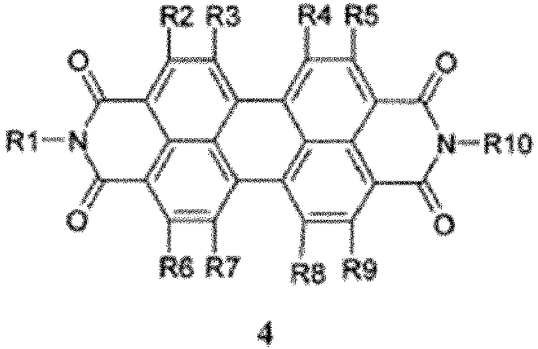 pour le codage
par fluorescence de substances macromoléculaires pour leur identification univoque à l'aide de la durée de décroissance de la fluorescence, dans lequel les résidus R¹ à R¹⁸ peuvent être identiques ou différents entre eux et représentent, indépendamment entre eux, de l'hydrogène ou des résidus alkyles linéaires avec au moins un et au maximum 37 atomes C, dans lesquels une à 10 unités CH₂ peuvent être remplacées indépendamment les unes des autres respectivement par des groupes carbonyles, des atomes d'oxygène, des atomes de soufre, des atomes de sélénium, des atomes de tellure, des groupes CH=CH cis ou trans, dans laquelle une unité CH peut également être remplacée par un atome d'azote, des groupes C≡C acétyléniques, des résidus phényles 1,2, 1,3 ou 1,4-substitués, des résidus de pyridine 2,3, 2,4, 2,5, 2,6, 3,4 ou 3,5-disubstitués, des résidus de thiophène 2,3, 2,4, 2,5 ou 3,4-disubstitués, des résidus de naphthaline 1,2, 1,3, 1,4, 1,5, 1,6, 1,7, 1,8, 2,3, 2,6 ou 2,7-disubstitués, dans lesquels un ou deux groupes CH peuvent être remplacés par des atomes d'azote, des résidus d'anthracène 1,2, 1,3, 1,4, 1,5, 1,6, 1,7, 1,8, 1,9, 1,10, 2,3, 2,6, 2,7, 2,9, 2,10 ou 9,10-disubstitués, dans lesquels un ou deux groupes CH peuvent être remplacés par des atomes d'azote, jusqu'à 12 différents atomes d'hydrogène des groupes CH₂ peuvent être remplacés respectivement, indépendamment entre eux, également au niveau d'atomes C identiques, par les halogènes fluor, chlore, brome ou iode ou le groupe cyano ou une chaîne alkyle linéiare avec jusqu'à 18 atomes C, dans laquelle une à 6 unités CH₂ peuvent être remplacées, indépendamment entre elles, par des groupes carbonyles, des atomes d'oxygène, des atomes de soufre, des atomes de sélénium, des atomes de tellure, des groupes CH=CH cis ou trans, dans lesquels une unité CH peut également être remplacée par un atome d'azote, des groupes C≡C acétyléniques, des résidus phényles 1,2, 1,3 ou 1,4-substitués, des résidus de pyridine 2,3, 2,4, 2,5, 2,6, 3,4 ou 3,5-disubstitués, des résidus de thiophène 2,3, 2,4, 2,5 ou 3,4-disubstitués, des résidus de naphthaline 1,2, 1,3, 1,4, 1,5, 1,6, 1,7, 1,8, 2,3, 2,6 ou 2,7-disubstitués, dans lesquels un ou deux groupes CH peuvent être remplacés par des atomes d'azote, des résidus d'anthracène 1,2, 1,3, 1,4, 1,5, 1,6, 1,7, 1,8, 1,9, 1,10, 2,3, 2,6, 2,7, 2,9, 2,10 ou 9,10-disubstitués, dans lesquels un ou deux groupes CH peuvent être remplacés par des atomes d'azote, jusqu'à 12 différents atomes d'hydrogène des groupes CH₂ peuvent être remplacés respectivement, indépendamment entre eux, également au niveau d'atomes C identiques, par les halogènes fluor, chlore, brome ou iode ou le groupe cyano ou une chaîne alkyle linéiare avec jusqu'à 18 atomes C, dans laquelle une à 6 unités CH₂ peuvent être remplacées, indépendamment entre elles, par des groupes carbonyles, des atomes d'oxygène, des atomes de soufre, des atomes de sélénium, des atomes de tellure, des groupes CH=CH cis ou trans, dans lesquels une unité CH peut également être remplacée par un atome d'azote, des groupes C=C acétyléniques, des résidus phényles 1,2, 1,3 ou 1,4-substitués, des résidus de pyridine 2,3, 2,4, 2,5, 2,6, 3,4 ou 3,5-disubstitués, des résidus de thiophène 2,3, 2,4, 2,5 ou 3,4-disubstitués, des résidus de naphthaline 1,2, 1,3, 1,4, 1,5, 1,6, 1,7, 1,8, 2,3, 2,6 ou 2,7-disubstitués, dans lesquels un ou deux atomes de carbone peuvent être remplacés par des atomes d'azote, des résidus d'anthracène 1,2, 1,3, 1,4, 1,5, 1,6, 1,7, 1,8, 1,9, 1,10, 2,3, 2,6, 2,7, 2,9, 2,10 ou 9,10-disubstitués, dans lesquels un ou deux atomes de carbone peuvent être remplacés par des atomes d'azote, jusqu'à 12 différents atomes d'hydrogène des groupes CH₂ des résidus alkyles peuvent être remplacés respectivement, indépendamment entre eux, également au niveau d'atomes C identiques, par les halogènes fluor, chlore, brome ou iode ou le groupe cyano ou une chaîne alkyle linéiare avec jusqu'à 18 atomes C, dans lesquels une à 6 unités CH₂ peuvent être remplacées, indépendamment entre elles, par des groupes carbonyles, des atomes d'oxygène, des atomes de soufre, des atomes de sélénium, des atomes de tellure, des groupes CH=CH cis ou trans, dans laquelle une unité CH peut également être remplacée par un atome d'azote, des groupes C=C acétyléniques, des résidus phényles 1,2, 1,3 ou 1,4-substitués, des résidus de pyridine 2,3, 2,4, 2,5, 2,6, 3,4 ou 3,5-disubstitués, des résidus de thiophène 2,3, 2,4, 2,5 ou 3,4-disubstitués, des résidus de naphthaline 1,2, 1,3, 1,4, 1,5, 1,6, 1,7, 1,8, 2,3, 2,6 ou 2,7-disubstitués, dans lesquels un ou deux atomes de carbone peuvent être remplacés par des atomes d'azote, des résidus d'anthracène 1,2, 1,3, 1,4, 1,5, 1,6, 1,7, 1,8, 1,9, 1,10, 2,3, 2,6, 2,7, 2,9, 2,10 ou 9,10-disubstitués, dans lesquels un ou deux atomes de carbone peuvent être remplacés par des atomes d'azote, au lieu de porter des substituants, les valences libres des groupes méthine respectivement des atomes C quaternaires peuvent être combinées par paires, de façon à obtenir des anneaux comme des anneaux de cyclohexane, les résidus R¹ à R⁹ peuvent en outre représenter, indépendamment entre eux, les atomes halogènes F, Cl, Br ou I.

3. Utilisation de bismides de terrylène d'acide tétracarboxylique de formule générale 5 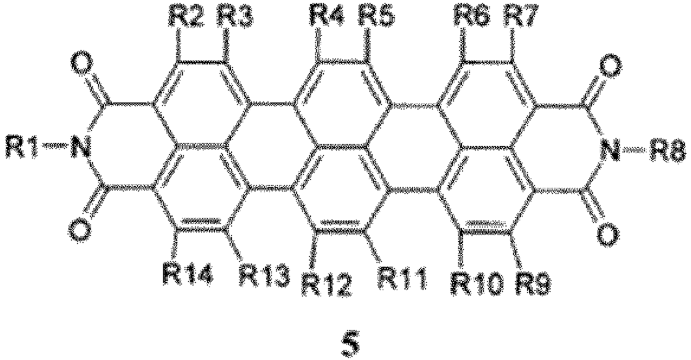 pour le codage par fluorescence par l'intermédiaire de la durée de décroissance de la fluorescence, dans lequel les résidus R¹ à R¹⁴ ont la signification indiquée dans la revendication 2.

4. Utilisation de dérivés de pérylène d'acide tétracarboxylique de formule générale 6 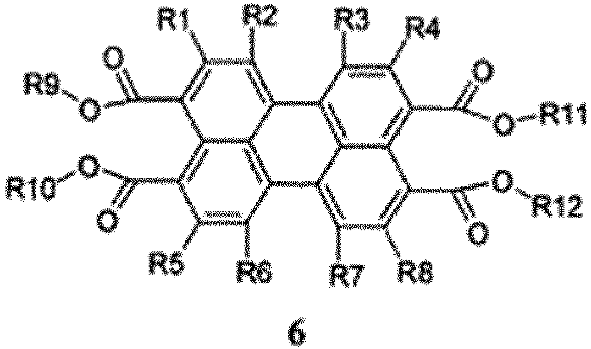 pour le codage par fluorescence par l'intermédiaire de la durée de décroissance de la fluorescence, dans lequel les résidus R¹ à R¹² ont la signification indiquée dans la revendication 2.

5. Utilisation selon l'une des revendications 2 à 4, **caractérisée en ce que** les dérivés de pérylène sont introduits en faible concentration dans des matériaux polymères et sont détectés par l'intermédiaire de leur durée de décroissance de fluorescence ; les concentrations préférées sont entre 1 ppb et 100 ppm, de préférence les concentrations sont entre 1 et 100 ppb.

6. Utilisation selon l'une des revendications 1 à 4, **caractérisée en ce que**, pour l'excitation de la fluorescence, des sources de lumière pulsées sont utilisées ; les sources de lumière préférées sont des sources à semi-conducteurs comme des diodes laser et des diodes électroluminescentes, de préférence contenant du nitrure de gallium, ou bien également des lampes à décharge de gaz.

7. Utilisation selon l'une des revendications 1 à 4, **caractérisée en ce que** la détection a lieu à l'aide de détecteurs sensibles à la phase.

8. Utilisation de la durée de décroissance de la fluorescence selon la revendication 1 pour la détection de matériaux polymères, **caractérisée en ce que**, pour l'excitation de la fluorescence, des sources de lumière pulsées périodiquement sont utilisées et le signal de fluorescence est cumulé et moyenné.

9. Utilisation de la durée de décroissance de la fluorescence selon l'une des revendications 2 à 4 pour le codage de matériaux polymères, **caractérisée en ce que**, pour l'excitation de la fluorescence, des sources de lumière pulsées périodiquement sont utilisées et le signal de fluorescence est cumulé et moyenné.

10. Utilisation de la durée de décroissance de la fluorescence selon la revendication 1 pour la détection des matériaux polymères pour la séparation en fonction du type à des fins de recyclage ; les matériaux polymères préférés sont des thermoplastiques, et parmi ceux-ci, sont particulièrement préférés le polyoxyméthylène (POM), le polystyrène (PS), le polyamide (PA), le polyéthylène téréphtalate (PET), le polycarbonate (PC), le polyéthylène (PE), le polypropylène (PP), le polychlorure de vinyle (PVC), le polyéther cétone (PEK) ou également les aramides, le kapton, le polysulfone.

11. Utilisation de la durée de décroissance de la fluorescence selon l'une des revendications 2 à 4 pour le codage de matériaux polymères pour la séparation en fonction du type à des fins de recyclage ; les matériaux polymères préférés sont des thermoplastiques, et parmi ceux-ci, sont particulièrement préférés le polyoxyméthylène (POM), le polystyrène (PS), le polyamide (PA), le polyéthylène téréphtalate (PET), le polycarbonate (PC), le polyéthylène (PE), le polypropylène (PP), le polychlorure de vinyle (PVC), le polyéther cétone (PEK) ou également les aramides, le kapton, le polysulfone.

12. Utilisation de la durée de décroissance de la fluorescence selon l'une des revendications 2 à 4 pour le codage de matériaux polymères pour la reconnaissance d'objets, pour leur identification univoque, également pour le marquage contre le piratage de matériaux.
